Europäisches Patentamt

European Patent Office

Office européen des brevets

(11) Numéro de publication: **0 233 802**
**A1**

(12) **DEMANDE DE BREVET EUROPEEN**

(21) Numéro de dépôt: 87400083.9

(22) Date de dépôt: 15.01.87

(51) Int. Cl.³: **F 16 L 15/00**
**E 21 B 17/042**

(30) Priorité: 15.01.86 FR 8600509

(43) Date de publication de la demande:
26.08.87 Bulletin 87/35

(84) Etats contractants désignés:
AT BE DE ES GB IT NL SE

(71) Demandeur: VALLOUREC INDUSTRIES, Société
Anonyme dite,
7, place du Chancelier Adenauer
F-75116 Paris(FR)

(72) Inventeur: Plaquin, Bernard
15, Rond Point des Acacias
F-59620 Aulnoye Aymeries(FR)

(74) Mandataire: Nony, Michel et al,
Cabinet NONY & CIE 29, rue Cambacérès
F-75008 Paris(FR)

(54) Joint fileté composite pour tube d'acier.

(57) L'invention est relative à un joint pour tube du type à manchon (1) dans lequel le manchon (1) a une structure composite (1, 5) comportant sur une certaine longueur de chacun de ses filetages (2), un garnissage (5) en matière synthétique qui se poursuit dans sa partie médiane interne (6) où il présente deux surfaces tronconiques concaves (9, 9') disposées symétriquement de part et d'autre du plan médian (7) du manchon (1) dans lequel les extrémités (8, 8') des éléments mâles (3, 3') viennent au contact, les extrémités de chacun des éléments mâles présentent sur leur périphérie externe un chanfrein tronconique convexe dont la forme correspond à chacune des surfaces tronconiques concaves (9, 9') du garnissage (5) en matière synthétique.

Fig. 1

EP 0 233 802 A1

Joint fileté composite pour tube d'acier.

La présente invention est relative à un joint fileté pour tube d'acier, utilisable en particulier pour l'industrie pétrolière, du type constitué par un manchon et deux éléments mâles dont les extrémités sont engagées axialement l'une contre l'autre.

On sait que les joints pour tube utilisés dans l'industrie pétrolière doivent présenter un certain nombre de caractéristiques difficiles à concilier et qui consistent notamment à ce que le joint, tout en étant facile à usiner et peu sensible aux endommagements, permette d'assurer une étanchéité parfaite vis-à-vis de très fortes pressions qui s'exercent soit à l'intérieur soit à l'extérieur du joint et ceci même dans l'hypothèse où le joint est soumis à des flexions et à d'importantes tractions où compressions axiales.

Il est également nécessaire que les éléments de joint puissent être interchangés sans que cela ait une influence néfaste sur la qualité de l'étanchéité qui est obtenue lors du nouveau vissage du joint avec d'autres éléments.

Les joints filetés actuellement utilisés dans l'industrie pétrolière comportent des filetages mâle et femelle qui sont le plus souvent coniques et qui assurent le maintien mécanique de deux éléments mâles dans un manchon femelle en supportant notamment les tractions axiales qui s'exercent sur le joint.

On connaît également des joints dans lesquels les extrémités des éléments mâles viennent en butée l'une contre l'autre ce qui a pour effet d'arrêter le vissage dès que le couple prescrit a été obtenu.

Les joints de ce type comportent également au moins un couple de surfaces d'étanchéité qui sont placées de telle manière que lors du vissage du joint, ces surfaces d'étanchéité viennent au contact l'une de l'autre avec une pression suffisante pour obtenir l'étanchéité qui est généralement du type métal-métal.

On connaît également d'après la demande de brevet français N° 84 15551 déposée le 10 Octobre 1984, le moyen d'obtenir une étanchéité au niveau des filetages en donnant aux filetages de l'élément mâle et de l'élément femelle des formes qui se correspondent parfaitement de telle sorte qu'il y ait un contact continu entre les surfaces de l'élément mâle et celles de l'élément femelle qui constituent l'ensemble des filetages.

Les joints de ce type sont caractérisés par le fait qu'un premier élément du joint comporte sur au moins une certaine longueur de son filetage un garnissage en matière synthétique dont le volume et la forme correspondent exactement au volume et à la forme du jeu qui existerait à l'état vissé entre ledit premier élément et le second élément dont les dimensions seraient à la limite des tolérances d'usinage qui permet le plus grand jeu possible entre les éléments à l'état vissé du joint.

On comprend dans ces conditions, qu'un tel joint est constitué par un premier élément ayant une structure composite et par un second élément qui est totalement métallique, la partie de la surface du contour du filetage du premier élément qui, lors du vissage, vient exercer des efforts de compression sur le filetage du second élément étant métallique, alors que la la partie de la surface du contour du filetage du premier élément métallique qui lors du serrage laisserait subsister un jeu avec le second élément est garnie de matière synthétique de manière à ce qu'avec les tolérances d'usinage limites du second élément entièrement métallique, il n'existe plus aucun jeu lors du vissage des deux éléments du joint.

De cette manière, la forme de la masse de matière synthétique ainsi rapportée sur le premier élément n'a pas à être modifiée lors du vissage pour s'adapter à la forme du filetage du second élément entièrement métallique comme cela était connu antérieurement, du fait qu'elle subit simplement une légère compression qui résulte des tolérances d'usinage.

Dans ce type de joint, il est avantageux d'utiliser comme matière synthétique des élastomères d'uréthane tels par exemple que le Polathane XPE ou le RIM 160 à structure microcellulaire, des polycarbonates, des polyoléfines, ou des polyamides.

La présente invention est relative à un joint de ce type dans lequel les deux éléments mâles sont réunis par un manchon qui ne comporte pas de butée interne, les deux extrémités des éléments mâles venant prendre appui l'une contre l'autre lors du vissage du joint et dans lequel, la matière synthétique qui est appliquée à l'intérieur du manchon au niveau du filetage se poursuit de manière continue dans la zone centrale du manchon au voisinage de l'endroit où se rejoignent les extrémités des éléments mâles.

La présente invention a pour objet un joint pour tube d'acier destiné en particulier à l'industrie du pétrole, du type dans lequel les extrémités filetées de deux éléments mâles sont réunies entre elles par un manchon possédant un double filetage, les extrémités des éléments mâles venant buter l'une contre l'autre lors du vissage, joint caractérisé par le fait que le manchon a une structure composite et qu'il comporte sur au moins une certaine longueur de chacun de ses filetages un garnissage en matière synthétique dont le volume et la forme correspondent exactement au volume et à la forme du jeu qui existerait à l'état vissé entre la partie métallique dudit manchon composite et chacun des éléments mâles correspondants dont les dimensions seraient à la limite de tolérance d'usinage qui permet le plus grand jeu possible à l'état vissé du joint, ledit garnissage en matière synthétique s'étendant dans la partie médiane interne du manchon, où il présente deux surfaces tronconiques concaves disposées symétriquement de part et d'autre du plan médian du manchon dans lequel les extrémités des éléments mâles viennent au contact, les extrémités des éléments mâles présentant sur leur périphérie externe, un chanfrein tronconique convexe dont la forme correspond à chacune des surfaces tronconiques concaves du garnissage en matière synthétique, les dimensions respectives du chanfrein tronconique convexe des éléments mâles et desdites surfaces tronconiques concaves du garnissage en matière synthétique étant telles que dans le cas des tolérances de fabrication qui laissent subsister le plus grand jeu entre l'extrémité de chacun des éléments mâles et le manchon, le chanfrein tronconique convexe de chacune de l'extrémité de chacun des éléments mâles vient prendre appui contre la surface tronconique concave correspondante du garnissage en matière synthétique et comprime ce garnissage avant que les extrémités des éléments mâles ne viennent au contact l'une de l'autre.

Conformément à l'invention, il est avantageux de réaliser le manchon et les extrémités des éléments mâles avec des filetages tronconiques trapézoïdaux de type Buttress.

Selon un mode de réalisation particulier de l'invention, les flancs actifs des filets qui supportent la traction axiale exercée sur le joint forment un angle rentrant incliné d'au moins 5° par rapport à un plan perpendiculaire à l'axe du joint.

Conformément à l'invention, il est préférable que les parties du garnissage en matière synthétique qui sont fixées sur le manchon et qui se trouvent entre les surfaces tronconiques concaves et les filetages, présentent un diamètre intérieur supérieur ou au moins égal au diamètre maximum possible de la partie correspondante des éléments mâles, afin que, lors du vissage du joint, les éléments mâles n'interfèrent pas avec ces parties du garnisssage

Conformément à l'invention, il est préférable qu'au niveau des surfaces tronconiques du garnissage du manchon et des chanfreins tronconiques convexes des éléments mâles, et dans le cas des tolérances d'usinage qui donnent les diamètres minimaux pour les extrémités des éléments mâles, il subsiste une interférence diamétrale d'environ 0,4 à 1,2 mm. En d'autres termes, il est préférable que les chanfreins tronconiques convexes des extrémités mâles compriment les surfaces tronconiques concaves des garnissages en matière synthétique du manchon d'une profondeur d'au moins 0,2 à 0,6 mm.

Les joints selon l'invention présentent plusieurs avantages par rapport aux joints connus.

Tout d'abord, les contacts entre les chanfreins tronconiques convexes des extrémités des éléments mâles et les surfaces tronconiques concaves du garnissage du manchon assurent une étanchéité complémentaire qui s'ajoute à l'étanchéité obtenue au niveau des filetages et à l'étanchéité qui est obtenue par le fait que les extrémités des éléments mâles viennent s'appliquer l'une contre l'autre.

On obtient de plus, grâce à l'invention, un manchon dont la totalité de la surface interne est revêtue d'un garnissage en matière synthétique ce qui permet d'éviter tous les problèmes de corrosion sur cette surface.

Enfin, grâce à la forme du garnissage en matière synthétique qui revêt la surface interne du manchon et qui correspond à la forme des éléments mâles, on obtient un joint monolithique qui résiste très bien aux différentes sollicitations mécaniques auxquelles il est soumis.

On obtient, grâce à l'invention, un joint de haute qualité appartenant au groupe des joints dits "Premium", dont l'usinage est très simple (pratiquement équivalent à celui d'un joint "Buttress"), qui est étanche aux hautes pressions d'huile ou de gaz et qui est totalement monolithique avec un faible frettage au niveau du filetage et une mise en butée des extrémités des éléments mâles.

On peut ainsi réaliser un joint de haute qualité d'une manière particulièrement économique.

Le joint selon l'invention peut être fabriqué comme indiqué dans la description de la demande de brevet français N° 84 15551 déposée le 10 Octobre 1984.

On peut, en particulier, utiliser un dispositif qui est constitué par deux mandrins ayant la forme des extrémités des éléments mâles correspondant aux dimensions minimales, compte-tenu des tolérances de fabrication des éléments mâles, mandrins qui sont munis d'orifices à l'intérieur desquels il est possible d'injecter la matière synthétique sous pression pour constituer le garnissage du manchon conforme à l'invention.

Dans le but de mieux faire comprendre l'invention, on va maintenant en décrire à titre d'illustration et sans aucun caractère limitatif plusieurs modes de réalisation pris comme exemples et représentés sur le dessin annexé.

Sur ce dessin :

- la figure 1 représente une vue schématique en coupe d'une partie d'un joint selon l'invention,

- la figure 2 est une vue partielle en coupe de la partie centrale du manchon de la figure 1,

- la figure 3 est une vue partielle en coupe des extrémités des éléments mâles de la figure 1,

- la figure 4 est une vue en coupe d'une variante des filetages présentant des flancs porteurs inversés,

- la figure 5 est une vue en coupe d'un dispositif qui permet de réaliser le garnissage de matière synthétique sur la surface interne du manchon.

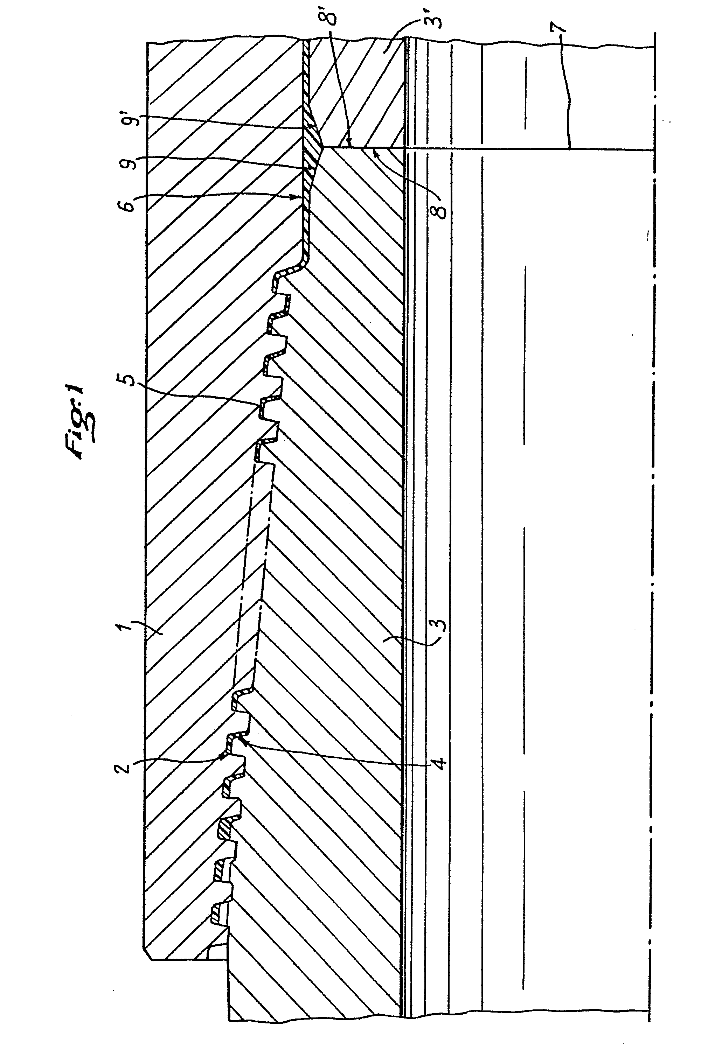

On a schématiquement représenté sur les figures 1, 2 et 3 une coupe partielle d'un premier mode de réalisation du joint selon l'invention.

Ce joint est constitué par un manchon 1 muni à chacune de ses extrémités d'un filetage tronconique interne 2 et à l'intérieur duquel viennent s'engager les extrémités de deux éléments mâles 3 et 3' qui sont également munis de filetages externes correspondants 4.

Sur la figure 1, seule l'extrémité de l'élément mâle 3 est représentée, la configuration de l'élément mâle 3' étant identique, (c'est-à-dire symétrique) à celle de l'extrémité de l'élément mâle 3.

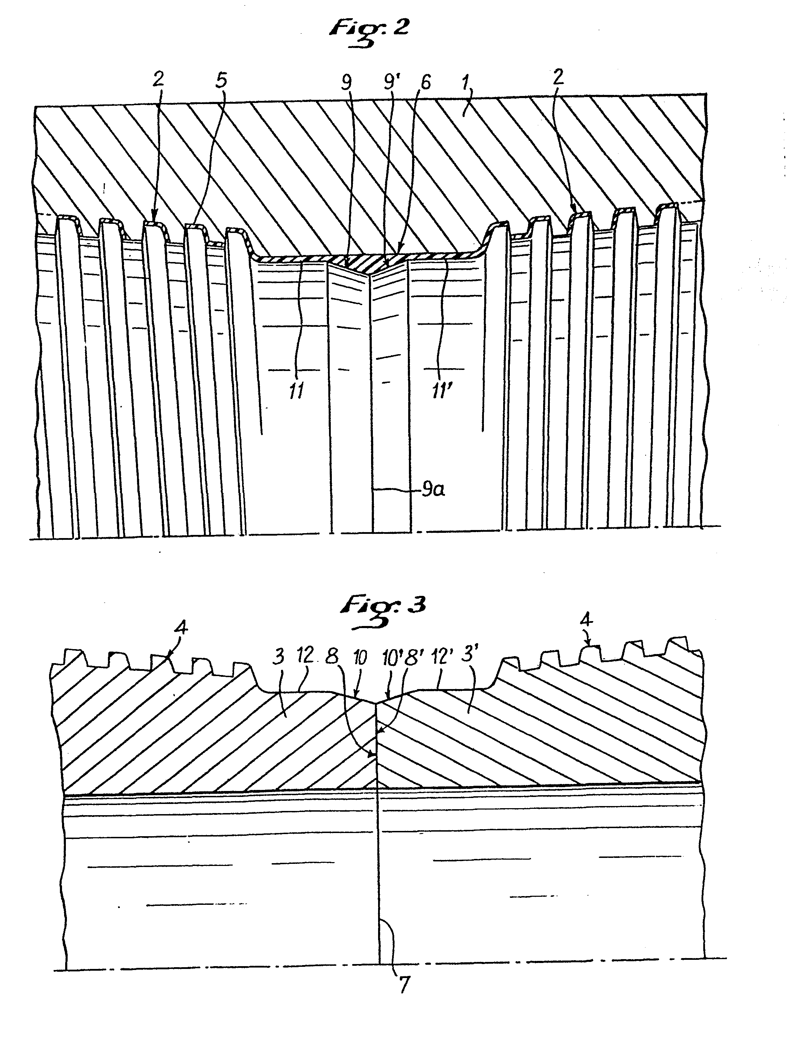

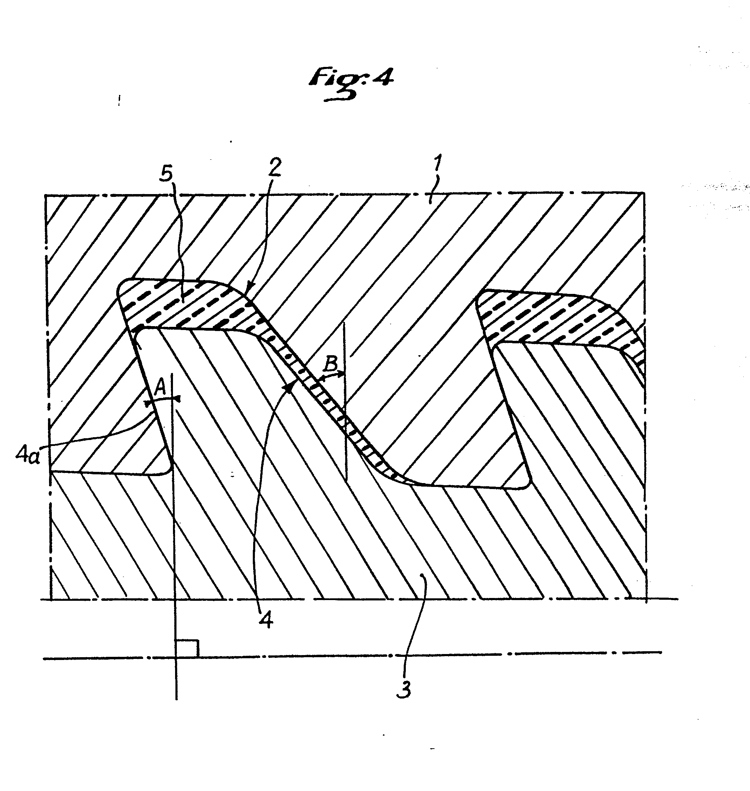

On a représenté sur les figures 2 et 3, d'une part la partie centrale du manchon 1 et d'autre part, les extrémités des éléments mâles 3 et 3'.

Comme cela est déjà décrit dans une demande de brevet antérieure, non publiée, l'espace libre compris entre les filetages mâles 4 des extrémités des éléments mâles et les filetages femelles 2 du manchon sont remplis par un garnissage synthétique 5, qui dans le cas présent, est fixé sur la surface interne du manchon 1.

Conformément à la présente invention, le garnissage 5 se poursuit sur la surface cylindrique médiane 6 du manchon.

Conformément à l'invention, les deux surfaces tronconiques concaves 9 et 9' qui sont réalisées conformément à l'invention sur le garnissage 5 en matière synthétique se raccordent dans un plan 7, selon lequel les faces frontales 8 et 8' des éléments mâles 3 et 3' s'appliquent l'une contre l'autre.

On retrouve sur la figure 2, la surface cylindrique interne médiane 6 du manchon sur laquelle se prolonge le garnissage 5 en matière synthétique ainsi que les deux surfaces tronconiques concaves selon l'invention 9 et 9' qui se raccordent selon l'arête 9a.

On retrouve de même sur la figure 3, les extrémités 8 et 8' des éléments mâles 3 et 3' qui se rejoignent dans le plan 7 qui correspond également à la ligne 9a de la figure 2.

Comme on le voit également sur la figure 3, les périphéries externes des éléments mâles comportent des chanfreins convexes 10 et 10' dont la forme correspond à celle des surfaces tronconiques concaves 9 et 9' du chanfrein.

Conformément à l'invention, les dimensions et les positions des surfaces tronconiques concaves 9 et 9' du manchon 2 et des chanfreins tronconiques convexes 10 et 10' des éléments mâles sont telles que lors du vissage du joint, au moment où les extrémités 8 et 8' des éléments mâles viennent au contact, les chanfreins 10 et 10' exercent déjà une compression sur les surfaces tronconiques 9 et 9' du manchon de manière à assurer une étanchéité supplémentaire.

A titre d'exemple pour un joint ayant environ 100 mm de diamètre, les chanfreins 10 et 10' peuvent exercer une compression de 0,2 à 0,6 mm des surfaces tronconiques 9 et 9', mesurée perpendiculairement à ces surfaces.

Selon l'invention, il est également préférable que le diamètre interne des surfaces 11 et 11' du garnissage du manchon de part et d'autre des surfaces tronconiques 9, 9' soit supérieur au diamètre externe des parties 12 et 12' des éléments mâles, de manière à ce que, lors du vissage, il ne s'exerce aucune déformation des parties 11 et 11' du garnissage en matière synthétique.

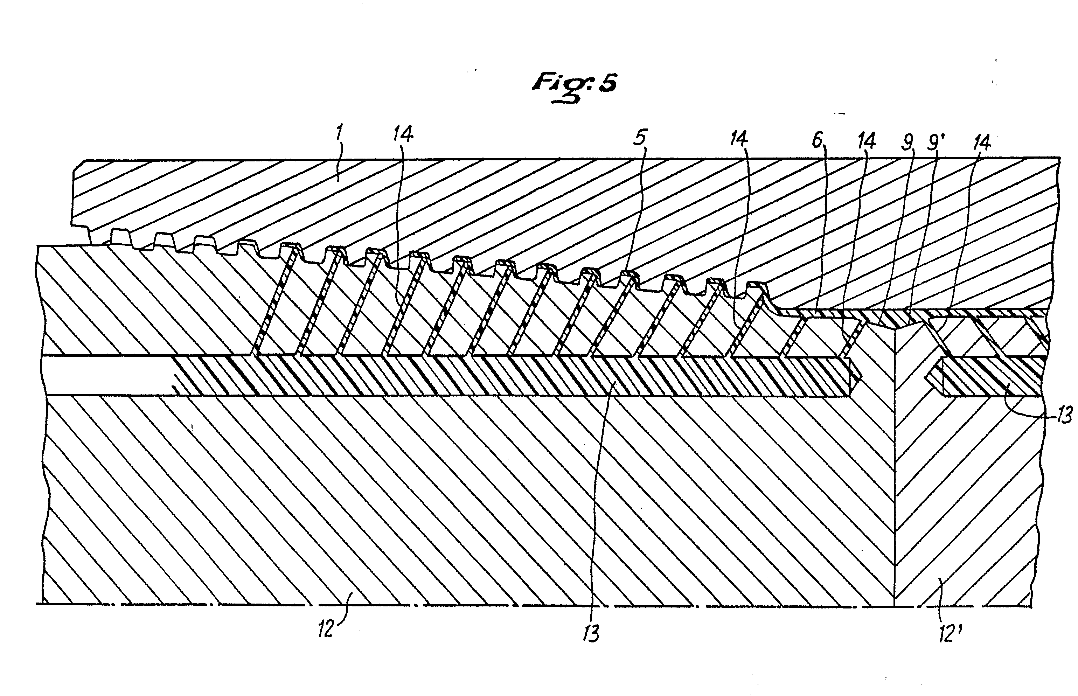

On a représenté sur la figure 4 une variante du filetage du joint représenté sur les figures 1 à 3.

On retrouve sur cette figure qui est à plus grande échelle, le manchon 1 et l'extrémité de l'élément mâle 3, qui sont respectivement munis de filetages 2 et 4.

La face porteuse 4a du filetage forme un angle rentrant A, en étant décalée vers la gauche par rapport à la perpendiculaire de l'axe du joint.

Conformément à l'invention il est préférable que dans ce mode de réalisation l'angle A ait une valeur supérieure à 5°.

On a également représenté sur la figure 4 l'angle B que fait la face arrière non porteuse du filetage avec le plan perpendiculaire à l'axe du joint. Cet angle B peut varier dans une large mesure, par exemple, de 10 à 45°.

On a représenté sur la figure 5 comment il est possible de réaliser le garnissage en matière synthétique conforme à l'invention.

On retrouve sur cette figure vu en coupe, le manchon 1 muni de son filetage et à l'intérieur duquel sont vissés deux mandrins identiques 12 et 12' dont la surface externe correspond à la surface externe de l'extrémité des tubes mâles, surface dont les dimensions correspondent au minimum des tolérances de fabrication.

Ces mandrins 12 et 12' sont munis d'une série de canaux longitudinaux 13 (dont un seul est représenté sur la figure 5) qui sont eux-mêmes réunis au volume qui se situe entre le manchon 1 et les mandrins par des canaux secondaires 14.

On conçoit ainsi qu'en injectant dans les canaux 13 de la matière synthétique telle que celles qui ont été décrites précédemment, on peut réaliser le garnissage conforme à l'invention.

On conçoit en effet que grâce aux canaux secondaires 14 on peut réaliser le garnissage 5 tant au niveau du filetage que sur la partie cylindrique 6 du manchon où l'on obtient ainsi les surfaces tronconiques 9 et 9'.

Pour éviter que lors du moulage le garnissage n'adhère au mandrin 12 et 12', il suffit, avant le montage, de pulvériser sur ces derniers un produit anti-adhésif.

On voit que l'invention peut être réalisée par des moyens simples et économiques.

Il va de soi que les modes de réalisation décrits ci-dessus n'ont été donnés qu'à titre d'exemples illustratifs et qu'ils pourront subir toutes modifications désirables sans sortir pour cela du cadre de l'invention.

En particulier, il est clair que l'invention n'est pas limitée aux types de filetages qui ont été décrits et que d'autres profils de filetages peuvent être utilisés.

Enfin, il va de soi que la surface interne du garnissage du manchon en matière synthétique peut être réalisée de manières différentes de celle qui a été décrite.

## REVENDICATIONS

1. Joint pour tube d'acier, destiné en particulier à l'industrie du pétrole, du type dans lequel les extrémités filetées (4) de deux éléments mâles (3,3') sont réunies entre elles par un manchon (1) possédant un double filetage (2), les extrémités (8,8') des éléments mâles (3,3') venant buter l'une contre l'autre lors du vissage, joint caractérisé par le fait que le manchon (1) a une structure composite (1,5) et qu'il comporte sur au moins une certaine longueur de chacun de ses filetages (2), un garnissage (5) en matière synthétique dont la forme et le volume correspondent exactement à la forme et au volume du jeu qui existeraient à l'état vissé entre la partie métallique dudit manchon (1) et chacun des éléments mâles (3,3') correspondants dont les dimensions seraient à la limite de tolérance d'usinage qui permet le plus grand jeu possible à l'état vissé du joint, ledit garnissage (5) en matière synthétique s'étendant dans la partie médiane interne (6) du manchon (1) où il présente deux surfaces tronconiques concaves (9,9') disposées symétriquement de part et d'autre du plan médian (7) du manchon (1) dans lequel les extrémités (8,8') des éléments mâles (3,3') viennent au contact, les extrémités de chacun des éléments mâles présentant sur leur périphérie externe un chanfrein tronconique convexe (10,10') dont la forme correspond à chacune des surfaces tronconiques concaves (9,9') du garnissage (5) en matière synthétique, les dimensions respectives des chanfreins tronconiques convexes (10,10') des éléments mâles et desdites surfaces tronconiques concaves (9,9') du garnissage (5) en matière synthétique étant telles que dans le cas des tolérances de fabrication qui laissent subsister le plus grand jeu entre les extrémités de chacun des éléments mâles et le manchon, le chanfrein tronconique convexe (10,10') de l'extrémité de chacun des éléments mâles vient prendre appui contre la surface tronconique concave correspondante (9,9') du garnissage (5) en matière synthétique et comprime ce garnissage avant que les extrémités (8,8') des éléments mâles ne viennent au contact l'une de l'autre.

2. Joint selon la revendication 1, caractérisé par le fait que les filetages sont des filetages trapézoïdaux de type "Buttress".

3. Joint selon l'une quelconque des revendications précédentes, caractérisé par le fait que les flancs actifs (4a) des filets (4) qui supportent la traction axiale exercée sur le joint forment un angle rentrant (A), incliné d'au moins 5° par rapport au plan perpendiculaire à l'axe du joint.

4. Joint selon l'une quelconque des revendications précédentes, caractérisé par le fait que les parties (11,11') du garnissage (5) en matière synthétique qui se trouvent sur le manchon (1) entre les surfaces

0233802

tronconiques concaves (9,9') et les filetages (4), présentent un diamètre supérieur ou au moins égal au diamètre maximum possible de la partie correspondante des éléments mâles, afin que lors du vissage du joint des éléments mâles n'interfèrent pas avec ces parties du garnissage.

5. Joint selon l'une quelconque des revendications précédentes, caractérisé par le fait que lors du vissage les chanfreins tronconiques convexes (10,10') des éléments mâles compriment les surfaces tronconiques (9,9') du manchon (1) d'environ 0,2 à 0,6 mm mesurés perpendiculairement à ces surfaces.

6. Joint selon l'une quelconque des revendications précédentes, caractérisé par le fait que le garnissage (5) en matière synthétique est constitué par des élastomères d'uréthanes tels que le polathane XPE ou le RIM 160 à structures microcellulaires, des polycarbonates ou des polyoléfines ou des polyamides.

7. Joint selon l'une quelconque des revendications précédentes, caractérisé par le fait que le filetage (2,4) est tronconique.

8. Joint selon l'une quelconque des revendications précédentes, caractérisé par le fait que la partie médiane interne (6) du manchon (1) est cylindrique.

Fig.1

0233802

**Fig. 2**

**Fig. 3**

*Fig. 4*

Fig. 5

4/4

0233802

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | CH-A- 557 499 (PAVEG ANSTALT) <br> * Figure 1; revendication 1 * | 1 | F 16 L 15/00 <br> E 21 B 17/042 |
| A | EP-A-0 094 509 (K.J. CARSTENSEN) <br> * Figure 2; revendication 2 * | 1-2,7 8 | |
| A | FR-A-2 359 353 (VALLOUREC) <br><br> * Figures 9-11; page 16, lignes 23-35; page 15, lignes 27-30; revendication 5 * | 1-3,7 8 | |
| A | EP-A-0 027 771 (VALLOUREC) <br><br> * Figures 1,3-5; revendication 1 * | 2-3,7 8 | |

-----

**DOMAINES TECHNIQUES
RECHERCHES (Int. Cl. ³)**

F 16 L
E 21 B

Le présent rapport de recherche a été établi pour toutes les revendications

| Lieu de la recherche | Date d'achèvement de la recherche | Examinateur |
|---|---|---|
| LA HAYE | 06-04-1987 | NARMINIO A. |